# EUROPÄISCHE PATENTSCHRIFT

(11) **EP 1 225 089 B1**
(45) Veröffentlichungstag und Bekanntmachung des Hinweises auf die Patenterteilung: **09.04.2008**
(21) Anmeldenummer: 02000627.6
(22) Anmeldetag: 11.01.2002
(51) Int. Cl.: B60N 2/46, A47C 7/54

(54) **Armlehne mit beweglicher Armauflage, insbesondere für Fahrzeuge**
Armrest with movable arm support particularly for vehicles
Accoudoir à support de bras mobile en particulier pour véhicules

(30) Priorität: 17.01.2001 DE 20100902 U
(43) Veröffentlichungstag der Anmeldung: 24.07.2002
(73) Patentinhaber: KTSN Kunststofftechnik Sachsen GmbH & Co. KG, 01796 Pirna (DE)
(72) Erfinder: Müller, Roland, 01458 Ottendorf-Okrilla (DE); Clemens, Andre, 01454 Lomnitz (DE)
(74) Vertreter: Tragsdorf, Bodo

(56) Entgegenhaltungen:
- EP-A- 0 963 720
- DE-A- 19 915 469

## Beschreibung

Die Erfindung betrifft eine Armlehne mit in Längsrichtung beweglicher Armauflage, die insbesondere zwischen den Vordersitzen im Bereich der Mittelkonsole von Personenkraftwagen einsetzbar ist.

Aus der gattungsbildenden DE 199 15 469 A1 ist eine Armlehne für einen Sitz bekannt, die an einer Basiseinrichtung vorgesehen ist, die um eine sitzfeste Schwenkachse verschwenkbar ist. Zur Verstellung der Armlehne in Längsrichtung weist die Basiseinrichtung eine Linearführung auf, die aus einem Paar Führungsstangen, die parallel beabstandet zueinander angeordnet sind, und zwei Buchsen, die die Lagerstelle der Armlehne bilden, bestehen. Die Führungsstangen sind mit Gleitsitztoleranz in der Lagerstelle geführt. Der Nachteil dieser Lösung besteht darin, daß die Armlehne frei hin- und herbewegbar ist und nicht in einer für den Fahrer bevorzugten Stellung arretierbar ist. Der Fahrer bzw. Bediener muß die Armlehne verstellen. Bei Bremsmanövern kann es vorkommen, daß sich die Armlehne von selbst verstellt, wodurch die Aufmerksamkeit des Fahrers im Straßenverkehr beeinträchtigt wird.
In der DE 198 46 030 C1 ist eine Armlehne mit einem längsverstellbaren Armauflageelement beschrieben. Dieses überdeckt einen Schlitten, der verschiebbar an einem Grundkörper der Armlehne gelagert ist. Das Armauflageelement ist zumindest in
einem Teilbereich biegbar ausgebildet, so daß beim Verschieben des Schlittens nach vorn oder nach hinten sich das Armauflageelement entsprechend verlängern kann. Je nach eingestellter Schlittenlänge wandert die nicht benötigte Länge des Armauflageelementes unsichtbar unter den Schlitten.
Diese Lösung ist in ihrer Herstellung sehr aufwendig und kostenintensiv. Außerdem muß der Fahrer bzw. Bediener die Verstellung des Schlittens selbst vornehmen.

Der Erfindung liegt die Aufgabe zugrunde, eine Armlehne mit beweglicher Armauflage, insbesondere für Fahrzeuge, zu schaffen, die sich durch einen einfachen und sicheren Verstellmechanismus für die Linearbewegung auszeichnet, einen geringen Bedienungsaufwand erfordert und in der Benutzungslage die gewählte Stellung beibehält.

Erfindungsgemäß wird die Aufgabe durch die im Anspruch 1 angegebenen Merkmale gelöst. Geeignete Ausgestaltungsvarianten sind Gegenstand der Ansprüche 2 bis 12. Die Führungsstangen sind in den dazugehörigen Führungen linearbeweglich angeordnet und mit dem Auflageelement fest verbunden. Dieses ist der Kontur der Armlehne angepaßt und mit der eigentlichen Armauflage als Polsterung oder dgl. verbunden. Die Führungsstangen stehen mit einer Einstell- und Bremsvorrichtung in Verbindung. Im Entlastungszustand der Armauflage sind die Führungsstangen in den Führungen in Längsrichtung verschiebbar. Der Fahrer bzw. Bediener kann die Armauflage problemlos in die von ihm gewünschte Stellung verschieben. Legt er den Arm auf die Armauflage (Belastungszustand), so wird selbsttätig eine Bremswirkung ausgelöst und die Armauflage ist in der jeweiligen Position arretiert. Nach einer entsprechenden Entlastung der Armauflage kann diese dann wieder in eine andere Stellung verschoben werden. Die Einstell- und Bremsvorrichtung ist wie folgt ausgebildet. Die Führungen, in denen die Führungsstangen linearbeweglich geführt sind, sind in jeweils einem Hebel angeordnet. Die Hebel sind in getrennten Lagerböcken einer gemeinsamen Grundplatte drehbar aufgenommen und mittels Federn unabhängig voneinander gegen einen Anschlag gedrückt. Dadurch werden die in den Hebeln gelagerten Führungsstangen um einige mm nach oben bewegt, so daß zwischen der Grundplatte und den unteren Stirnseiten der Armauflage bzw. des mit diesem verbundenen Auflageelementes ein entsprechender Spalt bzw. Freiraum gebildet wird. Die Lagerböcke sind symmetrisch zur Längsachse parallel beabstandet zueinander angeordnet und weisen jeweils an ihrer nach innen gerichteten Längsseite eine drehgelenkige Halterung mit einer Drehachse zur Aufnahme des jeweiligen Hebels auf. Jeder Hebel besitzt einen kurzen nach unten abgewinkelten Abschnitt und einen parallel zu Oberseite des Lagerbockes verlaufenden Abschnitt. Die Drehachse befindet sich im Abwinkelungsbereich zwischen diesen beiden Abschnitten. Am Ende des kurzen nach unten abgewinkelten Abschnittes der Hebel befinden sich zwei beabstandete Backen, die eine in der vertikalen Ebene liegende Reibfläche aufweisen, die als Bremsbelag ausgebildet ist. Das mit den Führungsstangen, die im Endbereich des parallel zur Oberseite des Lagerbockes verlaufenden Hebelabschnittes geführt sind, verbundene Auflageelement besitzt eine längliche als Profil ausgebildete Führung, die sich in Einbaulage in Längsrichtung zwischen den beiden Lagerböcken befindet, unter Einhaltung eines ausreichenden Führungsspiels. Im Belastungszustand der Armauflage werden die Bremsbacken der Hebelarme gegen das Führungsprofil des Auflageelementes gedrückt und bewirken die bereits erwähnte Arretierung der Führungsstangen. Im Entlastungszustand werden die Bremsbacken durch die unter Federwirkung stehenden Hebel zurückbewegt, bis zum Anschlag an der Innenseite der Lagerböcke. Die Bremswirkung wird dadurch aufgehoben und die an den Führungsstangen befestigte Armauflage kann wieder in Längsrichtung verschoben werden. Um im Entlastungszustand eine ungewollte Bewegung der Armauflage zu verhindern, sind zwischen der Grundplatte und dem Führungsprofil eine oder mehrere Formfedern angeordnet. Zum Verschieben der Armauflage in die vom Bediener gewünschte Stellung muß dieser lediglich mit geringem Kraftaufwand die Vorspannung dieser Federn überwinden.
Die vorgeschlagene Armlehne zeichnet sich durch einen einfachen Aufbau aus und läßt sich kostengünstig herstellen. Sie kann an verschiedenen Stellen eines Fahrzeuges einfach und schnell montiert werden, z. B an einer schwenkbaren Armlehnenhalterung zwischen den Sitzen oder an der Mittelkonsole im Bereich der Vordersitze.

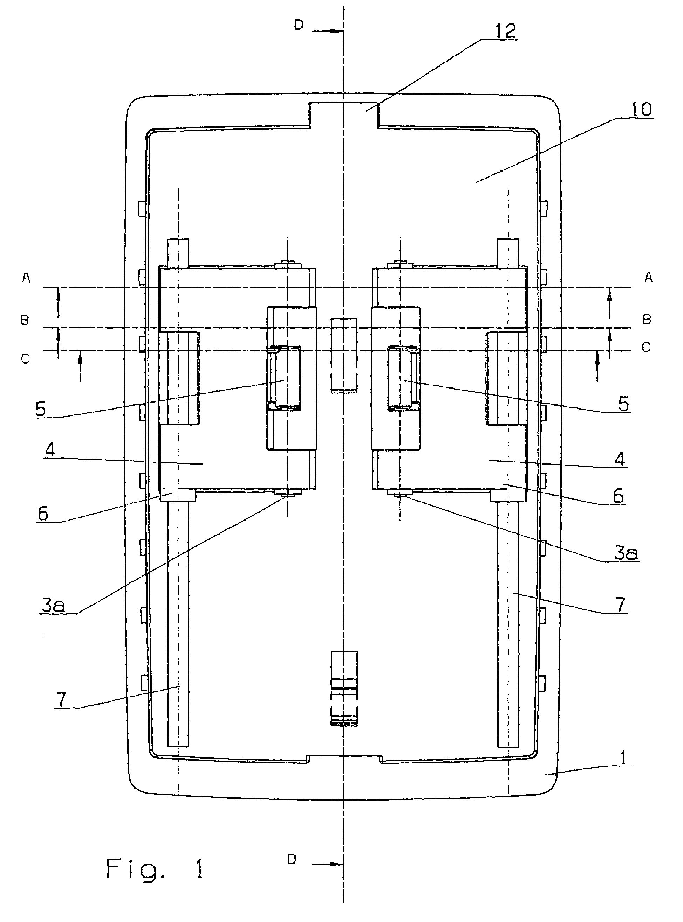

Die Erfindung soll nachstehend an einem Ausführungsbeispiel erläutert werden. In der zugehörigen Zeichnung zeigen
- Fig. 1: die Armlehne als Draufsicht,
- Fig. 2: die Grundplatte der Armlehne mit dem Verstellmechanismus in perspektivischer Darstellung,
- Fig. 3: einen Schnitt gemäß der Linie A-A in Fig. 1,
- Fig. 4: einen Schnitt gemäß der Linie B-B in Fig. 1,
- Fig. 5: einen Schnitt gemäß der Linie C-C in Fig. 1 und
- Fig. 6: einen Schnitt gemäß der Linie D-D in Fig. 1.

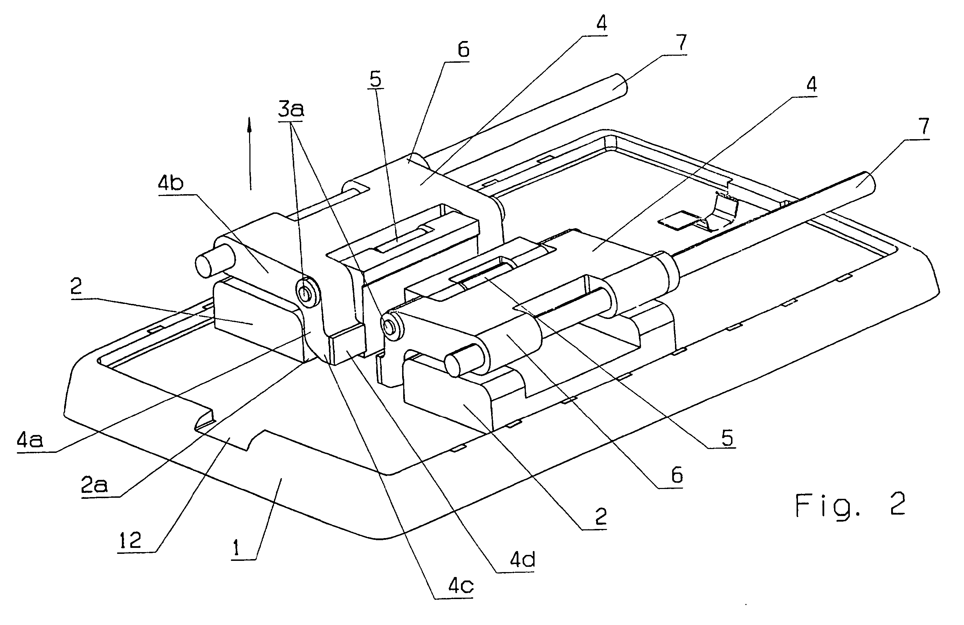

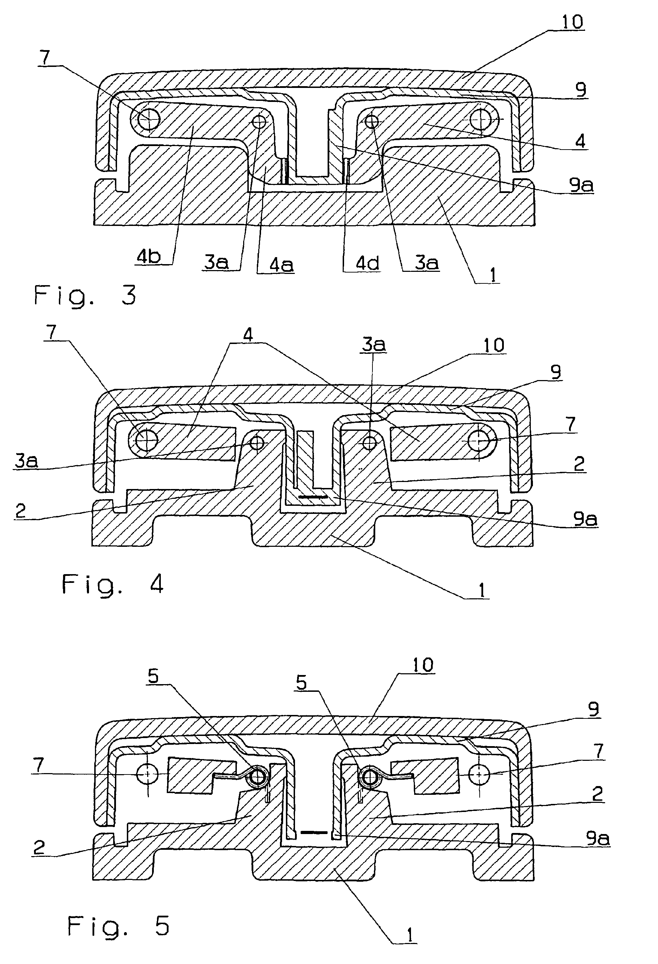

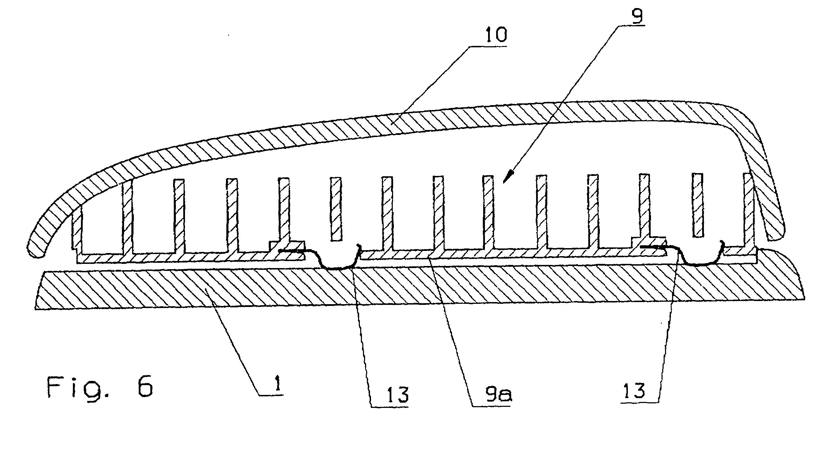

Die Armlehne besteht aus einer Grundplatte 1, die z. B. an einem schwenkbaren Armlehnenträger befestigt ist oder im Bereich der Vordersitze eines Personenkraftwagens fest mit der Mittelkonsole verbunden ist. Wie insbesondere aus der Fig. 2 hervorgeht, sind auf der Grundplatte 1 symmetrisch zur Längsachse zwei identische Lagerböcke 2 parallel zueinander beabstandet angeordnet. Die Lagerböcke 2 und die Grundplatte 1 können als einteiliges Bauteil ausgeführt sein. Die Lagerböcke 2 besitzen an der nach innen gerichteten Längsseite eine drehgelenkige Halterung 3 mit einer Drehachse 3a zur Aufnahme jeweils eines Hebels 4, mit einem kurzen nach unten abgebogenen Abschnitt 4a und einem parallel zur Oberseite des Lagerbockes 2 verlaufenden Abschnitt 4b. Im mittleren Bereich der Halterung 3 ist eine Feder 5 angeordnet, mittels derer der Abschnitt 4b des Hebels 4 soweit nach oben in Pfeilrichtung gedrückt wird, bis der Abschnitt 4a des Hebels 4 an die Innenseite 2a des Lagerbockes 2 anschlägt. Der abgebogene Abschnitt 4a der Hebel 4 besitzt an seinem Ende zwei Backen 4c mit einer in der vertikalen Ebene liegenden Reibfläche 4d, die mit einem geeigneten Belag versehen sind. Auf die Wirkungsweise dieser Reibflächen wird an anderer Stelle noch gesondert eingegangen. An den nach außen gerichteten Enden der Abschnitte 4b der Hebelarme 4 befinden sich Führungen 6 zur formschlüssigen Aufnahme von je einer linearbeweglichen Führungsstange 7. Die beiden in der Längsachse beweglichen Führungsstangen 7 besitzen zwei nicht näher dargestellte Anschläge zur Begrenzung der Axialbewegung. Die beiden symmetrisch angeordneten Führungsstangen 7 können in einem Bereich von 80 bis 90 mm, dem Einstellbereich der Armauflage, verschoben werden. An den beiden Führungsstangen 7 ist das Auflageelement 9 für die eigentliche Armauflage 10 befestigt, z. B. durch eine an sich bekannte verrastbare Schnappverbindung. Das Auflageelement 9 besitzt mittig ein längliches schmales Führungsprofil 9a, das sich über die gesamte Länge der Grundplatte 1 erstreckt und im aufgesetzten Zustand des Auflageelementes 9 sich mit einem geringen Spiel zwischen den Backen 4c der beiden Hebel 4 befindet. Durch diese Führung des Auflageelementes 9 wird auch bei einer seitlichen Belastung der Armlehne bzw. der Armauflage eine mittige Lage des Auflageelementes 9 gewährleistet. An der vorderen Seite der Grundplatte 1 ist eine Aussparung bzw. Führungsnut 12 für das Führungsprofil 9a des Auflageelementes 9 angeordnet, um für dieses eine ungestörte Ausfahrbewegung zu ermöglichen. Auf das Auflageelement 9 wird abschließend noch die gepolsterte Armauflage 10 aufgesetzt.
In der Ausgangslage sind die linearbeweglichen Teile der Armlehne durch eine oder mehrere Formfedern 13, die zwischen der Grundplatte 1 und dem Führungsprofil 9a des Auflageelementes 9 gegen eine unerwünschte Bewegung, z.B. bei Bremsvorgängen des Fahrzeuges, gesichert. Wie in Fig. 6 gezeigt, sind die Formfedern 13 an der Unterseite des Führungsprofils 9a des Auflageelementes 9 befestigt. Durch Überwindung der Vorspannung der Formfedern 13 kann der Bediener die Armauflage 10 in Längsrichtung in die von ihm gewünschte Stellung verschieben, durch eine Linearbewegung der in beiden Führungen 6 geführten Führungsstangen 7. In der Ausgangslage drücken die Federn 5 die Hebelabschnitte 4b nach oben, bis zum Anschlag der Hebelabschnitte 4a an die Innenseite 2a der Lagerböcke 2. Dabei geben die Backen 4c der Hebelabschnitte 4a das Führungsprofil 9a des Auflageelemente 9 frei. In diesem Zustand ist das Auflageelement 9 mit der Armauflage 10 in bezug auf die Grundplatte 1 geringfügig angehoben, z. B. um eine Höhe von 3 mm, wie in den Figuren 3 bis 5 gezeigt. Durch eine geringfügige Belastung der Armauflage 10, z.B. beim Auflegen des Armes, werden die Hebelabschnitte 4b der beiden Hebel 4 gegen die Vorspannung der Federn 5 nach unten und dabei gleichzeitig die Backen 4c mit ihren Reibflächen 4d gegen das Führungsprofil 9a der Auflageelemente 9 gedrückt und dieses in seiner momentanen Position arretiert. Nach einer Entlastung der Armauflage kann diese vom Bediener wieder in eine andere Position längsverschoben werden.

## Patentansprüche

1. Armlehne mit beweglicher Armauflage, insbesondere für Fahrzeuge, bestehend aus einem Auflageelement (9) mit einer darauf aufgesetzten Armauflage (10), wobei zur Linearführung der Armauflage ein Paar parallel beabstandeter Führungsstangen und jeweils eine dazugehörige Führung angeordnet sind, **dadurch gekennzeichnet, daß** die Führungsstangen (7) in den Führungen (6) linearbeweglich angeordnet und mit dem Auflageelement (9) fest verbunden sind, und die Führungsstangen (7) mit einer Einstell- und Bremsvorrichtung (2, 4, 5) verbunden sind, durch die im Entlastungszustand der Armauflage (10) das Auflageelement mit den Führungsstangen (7) in Längsrichtung verschiebbar ist und im Belastungszustand der Armauflage (10) das Auflageelement mit den Führungsstangen (7) in der jeweiligen Stellung arretiert ist.

2. Armlehne nach Anspruch 1, **dadurch gekennzeichnet, daß** jede der Führungen (6) an einem Hebel (4) angeordnet ist, die Hebel (4) in getrennten Lagerböcken (2) einer gemeinsamen Grundplatte (1) drehbar aufgenommen sind und mittels Federn (5) unabhängig voneinander gegen einen Anschlag (2a) gedrückt sind, wodurch die Führungsstangen (7) um einen definierten Abstand zu der Grundplatte (1) angehoben sind, und das Auflageelement (9) eine längliche Führung (9a) besitzt, die sich in Einbaulage in Längsrichtung zwischen den beiden Lagerböcken (2) befindet, und im Belastungszustand der Armauflage (10) die Hebel (4) gegen die Führung (9a) des Auflagelementes (9) gedrückt sind und im Entlastungszustand der Armauflage (10) die Hebel (4) wieder ihre Ausgangslage einnehmen.

3. Armlehne nach einem der Ansprüche 1 oder 2, **dadurch gekennzeichnet, daß** die Lagerböcke (2) symmetrisch zur Längsachse parallel beabstandet zueinander angeordnet sind und jeweils an ihrer nach innen gerichteten Längsseite eine drehgelenkige Halterung (3) mit einer Drehachse (3a) zur Aufnahme des jeweiligen Hebels (4) aufweisen.

4. Armlehne nach einem der Ansprüche 1 bis 3, **dadurch gekennzeichnet, daß** jeder Hebel (4) einen kurzen, nach unten abgewinkelten Abschnitt (4a) und einen parallel zur Oberseite des Lagerbockes (2) verlaufenden Abschnitt (4b) aufweist und die Drehachse (3a) im Abwinklungsbereich zwischen den beiden Abschnitten (4a, 4b) angeordnet ist.

5. Armlehne nach einem der Ansprüche 1 bis 4, **dadurch gekennzeichnet, daß** am Ende des kurzen nach unten abgewinkelten Abschnittes (4a) des Hebels (4) zwei beabstandete Backen (4c) angeordnet sind, die eine in der vertikalen Ebene liegende Reibfläche (4d) besitzen.

6. Armlehne nach einem der Ansprüche 1 bis 5, **dadurch gekennzeichnet, daß** die Führungen (6) zur Aufnahme der Führungsstangen (7) an den parallel zur Oberseite des Lagerbockes (2) verlaufenden Abschnitten (4b) der Hebel (4) angeordnet sind.

7. Armlehne nach einem der Ansprüche 1 bis 6, **dadurch gekennzeichnet, daß** die Federn (5) im mittleren Bereich der Drehachse (3a) angeordnet sind.

8. Armlehne nach einem der Ansprüche 1 bis 7, **dadurch gekennzeichnet, daß** die Führung (9a) des Auflageelementes (9) als Längsprofil ausgebildet ist und sich über die gesamte Länge der Grundplatte (1) erstreckt.

9. Armlehne nach einem der Ansprüche 1 bis 8, **dadurch gekennzeichnet, daß** sich die Führung (9a) des Auflageelmentes (9) mit einem geringen Spiel zwischen den Backen (4c) der Hebel (4) befindet.

10. Armlehne nach einem der Ansprüche 1 bis 9, **dadurch gekennzeichnet, daß** zwischen der Grundplatte (1) und der Führung (9a) des Auflageelementes (9) eine oder mehrere Formfedern (13) angeordnet sind.

11. Armlehne nach einem der Ansprüche 1 bis 10, **dadurch gekennzeichnet, daß** der Verstellweg der in Längsrichtung beweglichen Führungsstangen (7) in einem Bereich von 80 bis 120 mm liegt.

12. Armlehne nach einem der Ansprüche 1 bis 11, **dadurch gekennzeichnet, daß** die Grundplatte (1) an einem verstellbaren Armlehnenträger befestigt ist oder im Bereich der Vordersitze eines Fahrzeuges fest mit der Mittelkonsole verbunden ist.

## Claims

1. Armrest with movable arm support particularly for motor vehicles, consisting of a support element (9) with an arm support (10) on top equipped with a pair of parallel guide rods each of which being guided by a guiding device to allow the arm support to move to-and-fro, **characterised in that** the guide rods (7) can move to-and-fro in their guiding devices (6) and are rigidly connected to the support element (9), and the guide rods (7) are connected to an adjusting and braking device (2, 4, 5), which allows to-and-fro movements of the support element together with its guide rods (7) when the arm support (10) is in balanced state, whereat the support element together with its guide rods (7) is locked in their current positions, when the arm support (10) is under load.

2. Armrest according to claim 1, **characterised in that** either guiding device (6) is connected to a lever (4) each of which being housed in a separate swivel fixed pivot bracket (2), that is placed on a joint base plate (1), and pressed by springs (5) independently against a limit stop (2a), by which the guide rods (7) are lifted to a predefined distance from the base plate (1), and the support element (9) has an oblong guiding member (9a) which is built in between the two brackets (2) seen in longitudinal direction, and the levers (4) are pressed against the guiding member (9a) of the support element (9) when the arm support (10) is under load, and return to their original positions when the arm support (10) is in balanced state.

3. Armrest according to one of the claims 1 or 2, **characterised in that** the brackets (2) are positioned parallel to each other and run symmetrically to the longitudinal axis, and each have a revolute joint (3) with a swivelling axis (3a) provided at their longitudinal sides facing inward to take up the respective lever (4).

4. Armrest according to one of the claims 1 to 3, **characterised in that** both levers (4) have either a short, downward-bent section (4a) and a second section (4b) that runs parallel to the bracket's (2) upper side, with the swivelling axis (3a) being provided in the bent area between the two sections (4a, 4b).

5. Armrest according to one of the claims 1 to 4, **characterised in that** the lever (4) has fixed to the downward-bent section's (4a) far end two spaced jaws (4c) either of which has a friction face (4d) arranged parallel to the vertical surface plane.

6. Armrest according to one of the claims 1 to 5, **characterised in that** the guiding devices (6) which are to take up the guide rods (7) are fixed to those sections of the levers (4) which run parallel to the bracket's (2) upper side.

7. Armrest according to one of the claims 1 to 6, **characterised in that** the springs (5) are provided in the central area of the swivelling axis (3a).

8. Armrest according to one of the claims 1 to 7, **characterised in that** the support element's (9) guiding device (9a) is designed as a longitudinal profile section extending over the entire length of the base plate (1).

9. Armrest according to one of the claims 1 to 8, **characterised in that** the support element's (9) guiding device (9a) is provided between the jaws (4c) of the levers (4) at some clearance.

10. Armrest according to one of the claims 1 to 9, **characterised in that** one or more shaped springs (13) are provided between the base plate (1) and the support element's (9) guiding device (9a).

11. Armrest according to one of the claims 1 to 10, **characterised in that** the adjusting range of the guide rods' (7) to-and-fro movement is 80mm to 120mm.

12. Armrest according to one of the claims 1 to 11, **characterised in that** the base plate (1) is fixed to an adjustable armrest carrier or firmly attached to the centre console next to the vehicle's front seats.

## Revendications

1. Accoudoir à support de bras mobile, en particulier pour véhicules, se composant d'un élément support (9) muni d'un support de bras (10) reposant dessus, une paire de tiges de guidage écartées parallèlement l'une de l'autre et leurs guidages associés étant disposés pour le guidage linéaire du support de bras, **caractérisé en ce que** les tiges de guidage (7) sont disposées dans les guidages (6) pour le déplacement linéaire et sont reliées fixement à l'élément support (9), et les tiges de guidage (7) sont reliées à un dispositif de réglage et de freinage (2, 4, 5) permettant de déplacer dans le sens longitudinal l'élément support avec les tiges de guidage (7) lorsque le support de bras (10) n'est pas sollicité, et l'élément support avec les tiges de guidage (7) est bloqué dans la position respective lorsque le support de bras (10) est sollicité.

2. Accoudoir selon la revendication 1, **caractérisé en ce que** chaque guidage (6) est disposé sur un levier (4), les leviers (4) sont logés dans des paliers séparés (2) d'une plaque de base commune (1) de façon à pouvoir tourner et sont pressés l'un contre l'autre au moyen de ressorts (5) indépendamment l'un de l'autre contre une butée (2a), les tiges de guidage (7) étant relevées à un écart défini par rapport à la plaque de base (1), et l'élément support (9) possède un guidage allongé (9a) qui se trouve, une fois installé, dans le sens longitudinal entre les deux paliers (2), et lorsque le support de bras (10) est sollicité, les leviers (4) sont pressés contre le guidage (9a) de l'élément support (9), et lorsque le support de bras (10) n'est pas sollicité, les leviers (4) reprennent leur position de départ.

3. Accoudoir selon l'une quelconque des revendications 1 ou 2, **caractérisé en ce que** les paliers (2) sont disposés symétriquement par rapport à l'axe longitudinal en étant écartés parallèlement l'un par rapport à l'autre et présentent, à chaque fois sur leur côté longitudinal dirigé vers l'intérieur, une fixation (3) à articulation tournante présentant un axe de rotation (3a) et destinée à loger le levier respectif (4).

4. Accoudoir selon l'une quelconque des revendications 1 à 3, **caractérisé en ce que** chaque levier (4) présente une section courte (4a), coudée vers le bas, et une section (4b) parallèle à la face supérieure du palier (2), et l'axe de rotation (3a) est disposé dans la zone coudée entre les deux sections (4a, 4b).

5. Accoudoir selon l'une quelconque des revendications 1 à 4, **caractérisé en ce que** deux mâchoires (4c) écartées l'une de l'autre possédant une surface de frottement (4d) située dans le plan vertical sont disposées à l'extrémité de la section courte (4a), coudée vers le bas, du levier (a).

6. Accoudoir selon l'une quelconque des revendications 1 à 5, **caractérisé en ce que** les guidages (6) destinés à loger les tiges de guidage (7) sont disposés sur les sections (4b) des leviers (4) parallèles à la face supérieure du palier (2).

7. Accoudoir selon l'une quelconque des revendications 1 à 6, **caractérisé en ce que** les ressorts (5) sont disposés dans la zone médiane de l'axe de rotation (3a).

8. Accoudoir selon l'une quelconque des revendications 1 à 7, **caractérisé en ce que** le guidage (9a) de l'élément support (9) est réalisé sous forme de profilé long et s'étend sur toute la longueur de la plaque de base (1).

9. Accoudoir selon l'une quelconque des revendications 1 à 8, **caractérisé en ce que** le guidage (9a) de l'élément support (9) se trouve entre les mâchoires (4c) des leviers (4) en présentant un faible jeu.

10. Accoudoir selon l'une quelconque des revendications 1 à 9, **caractérisé en ce qu'**un ou plusieurs ressorts formés (13) sont disposés entre la plaque de base (1) et le guidage (9a) de l'élément support (9).

11. Accoudoir selon l'une quelconque des revendications 1 à 10, **caractérisé en ce que** la course des tiges de guidage (9,10) pouvant se déplacer dans le sens longitudinal est comprise entre env. 80 et 120 mm.

12. Accoudoir selon l'une quelconque des revendications 1 à 11, **caractérisé en ce que** la plaque de base (1) est fixée à un support d'accoudoir réglable ou est reliée fixement à la console du milieu dans la zone des sièges avant d'un véhicule.
